# EUROPÄISCHE PATENTANMELDUNG

(11) **EP 4 654 005 A1**
(43) Veröffentlichungstag der Anmeldung: **26.11.2025**
(21) Anmeldenummer: 24177345.6
(22) Anmeldetag: 22.05.2024
(51) Int. Cl.: G06F 8/34, G06F 8/33, G05B 19/02, G05B 19/05, G05B 19/042

(54) **ENTWICKLUNGSSYSTEM FÜR GRAPHISCHE REGELUNGSTECHNISCHE MODELLE (AUTOSAR), IN DENEN EIN SIGNAL EINES NICHT UNTERSTÜTZTEN TYPS DURCH EINE BIBLIOTHEKSFUNKTION ERSETZT WIRD**

(71) Anmelder: dSPACE GmbH, 33102 Paderborn (DE)
(72) Erfinder: Mair, Michael, 33102 Paderborn (DE)

(57) **Zusammenfassung**

Die Erfindung betrifft ein computerimplementiertes Verfahren zum Verarbeiten einer nicht unterstützten Signalart in einem graphischen Steuerungsmodell (12) einer Entwicklungsplattform (PC) derart, dass ein Steuerungsprogramm für eine Zielplattform (ES) aus dem graphischen Steuerungsmodell (12) der Entwicklungsplattform (PC) erzeugbar ist und bevorzugt erzeugt wird, wobei eine Definitionsdatenbank (DDT) wenigstens ein Datenspeicher-Objekt (20) umfasst, das einen für das graphische Steuerungsmodell (12) global erreichbaren Speicherbereich spezifiziert, so dass das graphische Steuerungsmodell (20) dazu ausgestaltet ist, Signale zwischen zwei nicht über eine Signalline verknüpfte Blöcke (14, 16, 18, 28, 30, 32, 34, 36, 38, 40, 42, 46) weiterzugeben, wobei in der Definitionsdatenbank (DDT) eine Spezifikation mit mindestens einem Bezeichner (22) für eine Variable eines zu einer nicht unterstützten Signalart korrespondierenden Datentyps hinterlegbar ist, und beim Erzeugen des Steuerungsprogrammes für die Zielplattform (ES) das Datenspeicher-Objekt (20) über den Bezeichner (22) als Repräsentant für die Variable verwendet wird.

Weiterhin betrifft die Erfindung eine Vorrichtung zur Datenverarbeitung umfassend Mittel zur Ausführung des obigen Verfahrens, ein Computerprogrammprodukt und einen entsprechenden computerlesbaren Datenträger.

## Beschreibung

Die Erfindung betrifft ein computerimplementiertes Verfahren zum Verarbeiten einer nicht unterstützten Signalart in einem graphischen Steuerungsmodell einer Entwicklungsplattform derart, dass ein Steuerungsprogramm für eine Zielplattform aus dem graphischen Steuerungsmodell der Entwicklungsplattform erzeugbar ist und bevorzugt erzeugt wird.

Zudem betrifft die Erfindung ein Verfahren zum Konfigurieren einer als Steuergerät ausgestalteten Zielplattform, bei dem ein Steuerungsprogramm für die Zielplattform aus einem eingelesenen graphischen Steuerungsmodell nach dem obigen Verfahren erzeugt wird.

Zudem betrifft die Erfindung eine Vorrichtung zur Datenverarbeitung umfassend Mittel zur Ausführung des obigen Verfahrens.

Weiterhin betrifft die Erfindung ein Computerprogrammprodukt, umfassend Befehle, die bei der Ausführung des Programms durch einen Computer diesen veranlassen, das obige Verfahren auszuführen.

Ferner betrifft die Erfindung einen computerlesbaren Datenträger, auf dem das obige Computerprogrammprodukt gespeichert ist.

Verfahren zur computergestützten Erzeugung eines Steuerungsprogramms aus einem graphischen Steuerungsmodell sind seit längerem bekannt und gehören zu den grundlegenden Funktionalitäten von Entwicklungsumgebungen. Insbesondere lassen sich derart Programmen für Steuerungssysteme wie beispielsweise Steuergeräte erstellen.

Das graphische Steuerungsmodell liegt oft in Form eines Blockschaltbildes vor, mit dessen Hilfe beispielsweise die mathematische Funktionalität eines Regelungsalgorithmus modelliert und dargestellt werden. Mittels des graphischen Steuerungsmodelles können Prozesse, Regler und/oder allgemein das Verhalten des Steuergeräts zunächst simuliert und das Vorliegen von gewünschten Eigenschaften überprüft werden. Das das Modell bildende Blockdiagramm umfasst in der Regel mehrere über Signallinien verbundene Blöcke, die Operationen wie Berechnungen ausführen, wobei ein Block beispielsweise aus mehreren Eingangssignalen ein Ausgangssignal berechnen kann. Über die Signallinien oder auch mittels für das graphische Steuermodell global erreichbaren Speicherbereichen lassen sich Signale unterschiedlicher Signalarten zwischen den Blöcken übertragen. Das graphische Steuerungsmodell unterstützt dabei eine Vielzahl von Signalarten beispielsweise Skalare oder Matrizen. Allerdings unterstützten gewisse Blöcke nicht alle möglichen Signalarten. Zudem werden gewisse Signalarten vom graphischen Steuerungsmodell überhaupt nicht unterstützt.

In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block auf Eingangssignale aus dem letzten Zeitschrittes eine oder mehrere Operationen anwenden, um Ausgangssignale des aktuellen Zeitschrittes zu erzeugen. Entsprechend sind übliche Annahmen in Bezug zu Steuerungsprogrammen, wie beispielsweise einer Lebensdauer von Variablen des Steuerungsprogramms nicht ohne weiteres auf das graphische Steuerungsmodell übertragbar.

Graphische Steuerungsmodell können neben einem zyklisch ausgeführten Teilmodell zur Beschreibung näherungsweise zeitkontinuierlichen Verhaltens des Steuergerätes auch ein Teilmodell zur Beschreibung eines diskreten Verhaltens umfassen, in dem eine Anzahl von Zuständen und Übergangsbedingungen definiert sind.

Verfahren zum Erzeugen von Steuerungsprogrammen aus graphischen Steuerungsmodellen werden auch als Codegeneratoren bezeichnet. Dabei handelt es sich um ein Computerprogramm, das das graphische Steuerungsmodell in Quellcode der gewählten Zielplattform - sprich in das Steuerungsprogramm - übersetzt. Das Steuerungsprogramm liegt im Gegensatz zum graphischen Steuerungsmodell in vollständig textueller Form vor und umfasst Instruktionen zur Ausführung auf der Zielplattform. Codegeneratoren gewährleisten somit eine sichere und fehlerfreie Implementierung einer abstrakten Funktionsbeschreibung (graphisches Steuerungsmodell) in ein Programm für die Zielplattform (Steuerungssystem). Die im graphischen Steuerungsmodell vorkommenden Signale unterschiedlicher Signalarten werden im Steuerungsprogramm durch Variablen unterschiedlichen Datentypen umgesetzt.

Ein übliches Vorgehen der Codeerzeugung besteht darin, dass für jeden Ausgang eines Blocks eine Variable im Quellcode erzeugt wird. Allerdings hat dies den Nachteil, dass in der Regel dabei zunächst mehr Variablen entstehen, als wirklich erforderlich sind. Durch eine anschließende Optimierung kann die Anzahl von Variablen bzw. allgemein die Codegröße verringert werden. So ist es aus der EP 2 418 577 A1 bekannt, ein Blockdiagramm in eine Zwischendarstellung zu transformieren und auf diese Zwischendarstellung mindestens eine Optimierung anzuwenden, um eine optimierte Zwischendarstellung zu erzeugen. Eine Vielzahl an weiteren Optimierungen, die an sich aus dem Compilerbau bekannt sind, kann nacheinander angewandt werden, um weiter optimierte Zwischendarstellungen zu erzeugen. Anschließend wird aus der optimierten Zwischendarstellung das Steuerungsprogramm, bevorzugt in C-Code erzeugt. Ein Verfahren zum Erzeugen eines Steuerungsprogrammes ist beispielsweise in der Druckschrift DE 10 2020 124 080 A1 oder der Druckschrift EP 2 916 183 B1 beschrieben.

Steuerungssysteme wie Steuergeräte, insbesondere solche im Automobilbereich, unterliegen nicht nur technischen Anforderungen, sondern müssen auch gewisse regulatorische Standards erfüllen. AUTOSAR (AUTomotive Open System ARchitecture) ist eine weltweite Entwicklungspartnerschaft von Automobilherstellern, Zulieferern und Unternehmen aus der Softwareindustrie mit dem Ziel standardisierte Softwarearchitektur für elektronische Steuergeräte zu entwickeln und zu etablieren. Um das Ziel der Skalierbarkeit auf unterschiedliche Fahrzeugvarianten und Plattformvarianten, sowie die Übertragbarkeit der Software zu erfüllen, wurden und werden Standards und Spezifikationen definiert, die vom Steuerungsprogramm der Steuergeräte zu erfüllen sind. Beispielsweise enthält die Systemkonfigurationsbeschreibung zwischen verschiedenen Steuergeräten vereinbarten Informationen wie zum Beispiel die Definition von bestimmten Datentypen. Somit kann es vorkommen, dass ein spezifischer Datentyp auf Ebene des Steuerungsprogramm vorgegeben ist, für den es aber im graphischen Steuerungsmodell keine dazu korrespondierende Signalart gibt, die vom graphischen Steuerungsmodell unterstützt wird.

Weiterhin ermöglicht das graphischen Steuerungsmodell in der Regel das Einbinden von sogenannten Custom-Code-Blöcken, also Blöcken die Operationen durchführen, die vom Anwender spezifisch programmiert werden. Somit ist es möglich, dass der Nutzer innerhalb des Custom-Code-Blocks bzw. dem dazu korrespondierenden Code-Block im Steuerungsprogramm ein spezifischer Datentyp verwendet, für den es im graphischen Steuerungsmodell keine dazu korrespondierende Signalart gibt, die vom graphischen Steuerungsmodell unterstützt wird. Nichtdestotrotz muss zum Erzeugen des Steuerungsprogrammes aus dem graphischen Steuerungsmodell die nicht unterstützte Signalart verarbeitet werden.

Davon ausgehend ist es die Aufgabe der Erfindung, Maßnahmen anzugeben, um die Verarbeitbarkeit von nicht unterstützten Signalarten im graphische Steuerungsmodell zu verbessern. Zudem ist es Aufgabe der Erfindung Maßnahmen anzugeben, um vereinfacht aus einem graphischen Steuerungsmodell ein Steuerungsprogramm zu erzeugen.

Diese Aufgabe wird durch den Gegenstand der Hauptansprüche gelöst. Bevorzugte Weiterbildungen finden sich in den Unteransprüchen.

Erfindungsgemäß wird also computerimplementiertes Verfahren zum Verarbeiten einer nicht unterstützten Signalart in einem graphischen Steuerungsmodell einer Entwicklungsplattform derart, dass ein Steuerungsprogramm für eine Zielplattform aus dem graphischen Steuerungsmodell der Entwicklungsplattform erzeugbar ist und bevorzugt erzeugt wird, bereitgestellt, wobei das graphische Steuerungsmodell ein Blockdiagramm mit einer Mehrzahl von Blöcken umfasst, und dazu ausgestaltet ist, Signale unterschiedlicher Signalarten zwischen wenigstens zwei Blöcken weiterzugeben, wobei im erzeugten Steuerungsprogramm die Signalarten durch unterschiedliche Datentypen umgesetzt werden, und wobei das graphische Steuerungsmodell nicht alle im Steuerungsprogramm notwendigen Datentypen unterstützt, wobei das graphische Steuerungsmodell auf eine Definitionsdatenbank referenziert, in der Informationen zum graphischen Steuerungsmodell gespeichert sind, wobei die Definitionsdatenbank wenigstens ein Datenspeicher-Objekt umfasst, und wobei das Datenspeicher-Objekt einen für das graphische Steuerungsmodell global erreichbaren Speicherbereich spezifiziert, so dass das graphische Steuerungsmodell dazu ausgestaltet ist, Signale zwischen zwei nicht über eine Signallinie verknüpfte Blöcke weiterzugeben. Das Verfahren zeichnet sich dadurch aus, dass in der Definitionsdatenbank eine Spezifikation mit mindestens einem Bezeichner für eine Variable eines zu einer nicht unterstützten Signalart korrespondierenden Datentyps hinterlegbar ist, und beim Erzeugen des Steuerungsprogrammes für die Zielplattform das Datenspeicher-Objekt über den Bezeichner als Repräsentant für die Variable verwendet wird.

Da beim erfindungsgemäßen Verfahren bevorzugt das Steuerungsprogramm für die Zielplattform erzeugt wird, handelt es sich also in anderen Worten bevorzugt auch um ein computerimplementiertes Verfahren zum Erzeugen des Steuerungsprogrammes für die Zielplattform aus dem graphischen Steuerungsmodell der Entwicklungsplattform.

Das erfindungsgemäße Verfahren nutzt also das in der Definitionsdatenbank vorhandene Datenspeicher-Objekt, das den für das graphische Steuerungsmodell global erreichbaren Speicherbereich spezifiziert, sowie den ebenfalls in der Definitionsdatenbank hinterlegbaren Bezeichner für die Variable im Steuerungsprogramm, die einen Datentypen aufweist, zu der keine im graphischen Steuerungsmodell korrespondierende Signalart existiert, um beim Erzeugen des Steuerungsprogrammes das Datenspeicher-Objekt über den Bezeichner als Repräsentant für die Variable zu verwenden. Auf Ebene des graphischen Steuerungsmodelles wird das Datenspeicher-Objekt, das beim Erzeugen des Steuerungsprogrammes als Repräsentant für die Variable verwenden wird, also quasi von außen - sprich vom global erreichbaren Speicherbereich - an diejenigen Blöcke, in denen die nicht unterstützte Signalart verarbeitet wird, übergeben. Anders formuliert wird derart sichergestellt, dass Signale, deren Signalart vom graphischen Steuerungsmodell nicht unterstützt wird, oder im graphischen Steuerungsmodell nicht zulässig sind, trotz dessen im erzeugten Steuerungsprogrammes an der richtigen Stelle verwendet werden. Vorliegend umfasst die nicht unterstützte Signalart, nicht lediglich Signalarten, die vom graphischen Steuerungsmodell nicht unterstützt werden, sondern auch Signalarten, die vom Codegenerator zum Erzeugen des Steuerungsprogrammes nicht unterstützt werden.

In anderen Worten wird derart also die Modellierung der Schnittstelle zu denjenigen Blöcken, in denen Signale mit nicht unterstützten Signalarten verarbeitet werden, um die nicht unterstützten Signalarten erweitert. Somit wird die Verarbeitbarkeit von nicht unterstützten Signalarten auf Ebene des graphischen Steuerungsmodelles verbessert, sowie das Erzeugen des Steuerungsprogrammes aus dem graphischen Steuerungsmodell vereinfacht.

Insbesondere ist es mittels des vorliegenden Verfahrens möglich, dass ausgehend vom graphischen Steuerungsmodell das Steuerungsprogramm - sprich der Quellcode - korrekt generiert wird, obwohl die Signalart vom graphischen Steuerungsmodell und/oder vom Codegenerator nicht unterstützt wird. Es ist zur Generierung des Steuerungsprogrammes nicht notwendig, dem Codegenerator eine abschließende Beschreibung der nicht unterstützten Signalart zu übermitteln. Stattdessen ist es ausreichend für eine korrekte und automatische Codegenerierung, dass die Definitionsdatenbank das Datenspeicher-Objekt umfasst und dass dem Codegenerator der Bezeichner übermittelt wird, der in der Definitionsdatenbank in der Spezifikation hinterlegt ist. Dadurch, dass bei der Erzeugung des Steuerungsprogrammes das Datenspeicher-Objekt als Repräsentant für die Variable des zur nicht unterstützten Signalart korrespondierenden Datentyps verwendet wird, kann mit dem vom graphischen Steuerungsmodell und/oder vom Codegenerator nicht unterstützten und entsprechend nicht darstellbaren Teil des Signales umgegangen werden. In anderen Worten ermöglicht das Verfahren also trotz unvollständiger Information über die nicht unterstützte Signalart ein korrektes Steuerungsprogramm zu generieren.

Das Blockdiagramm des graphischen Steuerungsmodelles umfasst mehrere Blöcke und ist dazu ausgestaltet, Signale zwischen wenigstens zwei Blöcken weiterzugeben. Hierfür gibt ein erster Block ein Ausgangssignal, das je nach Definition aus einem Wert oder mehrere zusammengehörigen Werten bestehen kann, aus und ein zweiter Block empfängt dieses als sein Eingangssignal und berücksichtigt das Signal bei der Ermittlung seines Ausgangssignals. Signale können unterschiedlicher Art sein und strukturierte oder nicht strukturierte Datentypen umfassen und/oder transportieren. Beispielsweise kann das Signal als Matrix oder als Skalar ausgestaltet sein.

Die Blöcke in dem Blockdiagramm können atomar sein, also aus Sicht der umgebenden Blöcke eine Einheit bilden, bei der zu Beginn eines Rechenschritts alle Eingangssignale anliegen müssen und zum Ende eines Rechenschritts alle Ausgangssignale vorhanden sind.

Wenn Blockdiagramme hierarchisch sind, kann eine Vielzahl von Blöcken in einer untergeordneten Ebene den Aufbau eines Blocks in einer übergeordneten Ebene beschreiben. Hierarchische bzw. zusammengesetzte Blöcke, auch wenn diese atomar sind, können eine Vielzahl von Blöcken in einer untergeordneten Ebene umfassen.

Die Weitergabe der Signale kann - muss aber nicht - über Signallinien erfolgten, die die Blöcke miteinander verbinden. Zudem können Signale zwischen Blöcken mittels dem vom Datenspeicher-Objekt spezifizierten und für das graphische Steuermodell global erreichbaren Speicherbereich übertragen werden. Bevorzugt handelt es sich bei dem global erreichbaren Speicherbereich, um einen Speicherbereich, der im graphischen Steuerungsmodell von einem DataStore-Memory Block definiert wird. Der vom Datenspeicher-Objekt spezifizierte Speicherbereich kann von einem DataStore-Write Block des graphischen Steuerungsmodelles beschrieben werden und/oder von einem DataStore-Read Block des graphischen Steuerungsmodelles gelesen werden. Derart lassen sich Signale zwischen Blöcken transferieren, ohne dass eine Signallinie zwischen Blöcken vorhanden ist.

Da ein DataStore-Memory Block einen den DataStore-Memory Block hierarchisch in tieferliegende Strukturen eindeutig identifizierenden Namen aufweist, ergeben sich durch den hierarchischen Aufbau des graphische Steuermodells, und dem Ort des DataStore-Memory Blocks im graphischen Steuermodell in Relation zu den Orten der DataStore-Write Blöcke und/oder der DataStore-Read Blöcke die Zugriffsrechte auf den Speicherbereich. Befindet sich der DataStore-Memory Block im graphischen Steuermodell auf der obersten Hierarchieebene, haben alle im graphischen Steuermodell vorkommenden DataStore-Write Blöcke und/oder DataStore-Read Blöcke, die den Namen dieses DataStore-Memory Blocks angeben, auf den vom DataStore-Memory Block spezifizierten Speicherbereich Zugriff. Hingegen sind DataStore-Write Blöcke und/oder DataStore-Read Blöcke, die einen Namen eines DataStore-Memory Block angeben, der in der Hierarchie des graphischen Steuermodells nicht auf gleicher Ebene oder auf einer höherliegenden Ebene wie der entsprechende DataStore-Write Block und/oder DataStore-Read Block vorhanden ist, ungültig. Mit "global erreichbarem Speicherbereich" ist vorliegend insbesondere gemeint, dass der vom Datenspeicher-Objekt spezifizierte Speicherbereich für diejenigen Blöcke, in denen Signale der nicht unterstützten Signalart verarbeitet werden, erreichbar ist. Der Begriff "global erreichbarer Speicherbereich" impliziert also nicht zwingend, dass der Speicherbereich auf der obersten Hierarchieebene des graphischen Steuermodelles angelegt ist, sondern bedeutet, dass der Speicherbereich auf mindestens jener Hierarchieebene angelegt ist, die für die Funktionalität notwendig ist.

Das graphische Steuerungsmodell referenziert auf die Definitionsdatenbank, in der Informationen zum graphischen Steuerungsmodell gespeichert sind. Insbesondere umfasst die Definitionsdatenbank auch das Datenspeicher-Objekt zum Spezifizieren des global erreichbaren Speicherbereiches, das als Repräsentant für die Variable des zur nicht unterstützten Signalart korrespondierenden Datentyps verwendet wird. Insbesondere ist die Definitionsdatenbank derart ausgeführt, dass die Spezifikation, die wenigstens den Bezeichner für die Variable des zur nicht unterstützten Signalart korrespondierenden Datentyps umfasst, hinterlegbar ist. Die Definitionsdatenbank kann beispielsweise eine Baumstruktur aufweisen.

Beim Ermitteln des Steuerungsprogramm aus dem graphischen Steuerungsmodell wird bevorzugt in einem mehrstufigen Prozess das Steuerungsprogramm generiert, wobei die im graphischen Steuerungsmodell vorkommenden Signale unterschiedlicher Signalarten im Steuerungsprogramm zu Variablen unterschiedlichen Datentypen korrespondieren. Bei diesem Prozess wird bevorzugt auf die in der Definitionsdatenbank hinterlegten Informationen, und besonders bevorzugt auf den in der Spezifikation definierten Bezeichner, zurückgegriffen. Als Signal einer nicht unterstützten Signalart wird vorliegend ein im graphischen Steuerungsmodell vorkommendes Signal bezeichnet, dessen Variable im Steuerungsprogramm einen Datentyp aufweist, zu dem im graphischen Steuerungsmodell keine Signalart, die vom graphischen Steuerungsmodell unterstützt wird, existiert. Zudem wird vorliegend unter dem Begriff der nicht unterstützten Signalart ein Signal verstanden, für das der Codegenerator keine Bildungsvorschrift kennt und entsprechend vom Codegenerator nicht unterstützt wird. Beispielsweise kann es sich bei der nicht unterstützten Signalart um ein breitenvariables Bus-Array-Signal (englisch: *Arrays of Buses*) handeln. Für nicht unterstützte Signalarten sind entsprechend auch keine Bildungsvorschriften zum Erzeugen des Steuerungsprogrammes, wie bei unterstützten Signalarten, hinterlegt. Durch den expliziten Einsatz des in der Definitionsdatenbank hinterlegten Datenspeicher-Objektes, das als Repräsentant für die Variable des zur nicht unterstützten Signalart korrespondierenden Datentyps verwendet wird, kann aber mit dem unbekannten bzw. nicht darstellbaren Teil des Signales umgegangen werden. Insbesondere umfasst die Definitionsdatenbank also das Datenspeicher-Objekt zum Spezifizieren des global erreichbaren Speicherbereiches, das als Repräsentant für die Variable des zur nicht unterstützten Signalart korrespondierenden Datentyps verwendet wird.

Das Steuerungsprogramm - auch Quellcode genannt - liegt bevorzugt in vollständig textueller Form vor und umfasst bevorzugt Instruktionen für das Steuergerät.

Das Verfahren hat also den Vorteil, dass der Nutzer eine Repräsentation eines nicht näher greifbaren Objektes erhält - sprich eine Repräsentation des Signales der nicht unterstützten Signalart - und der Nutzer diese Repräsentation gezielt für die weitere Spezifikation und Modellierung einsetzten kann. Zudem ermöglicht das Verfahren über die Repräsentation ohne konkrete Kenntnis der nicht unterstützten Signalart korrekten Quellcode zu generieren. Insbesondere ist es derart möglich, korrekten Quellcode zu generieren für graphische Steuerungsmodelle, bei denen Blöcke Signale der nicht unterstützten Signalart empfangen (konsumierende Blöcke) und/oder bei denen Blöcke die nicht unterstützte Signalart ausgeben (spezifizierende Blöcke). Dadurch dass beim Erzeugen des Steuerungsprogrammes das Datenspeicher-Objekt, das den für das graphische Steuerungsmodell global erreichbaren Speicherbereich spezifiziert, als Repräsentant für die Variable genutzt wird, kann von den oben beschriebenen, hierarchisch strukturierten Zugriffsrechten auf den durch das Datenspeicher-objekt spezifizierten Speicherbereich profitiert werden, so dass auch ohne abschließende Beschreibung der nicht unterstützten Signalart korrekter Quellcode generiert wird. In anderen Worten wird somit automatisch in dem jeweiligen Block korrespondierenden Anteil des Steuerungsprogrammes die Variable mit dem zur nicht unterstützten Signalart korrespondierenden Datentypen verwendet.

Gemäß einer bevorzugten Weiterbildung der Erfindung ist vorgesehen, dass die Spezifikation in einem Datenelement in der Definitionsdatenbank hinterlegbar ist, und im graphischen Steuerungsmodell das Datenspeicher-Objekt als Repräsentant für das Datenelement verwendet wird. Das Datenelement in der Definitionsdatenbank macht den Umgang und/oder Zugriff mit der Spezifikation besonders einfach. Auf Ebene des graphischen Steuerungsmodell fungiert das Datenspeicher-Objekt quasi als Platzhalter für das Datenelement.

In diesem Zusammenhang ist gemäß einer weiteren Weiterbildung der Erfindung vorgesehen, dass die Spezifikation Zusatzinformationen betreffend den Zugriff auf das Datenelement und/oder die Weitergabe des Datenelementes im graphischen Steuerungsmodell umfasst. Beispielsweise kann in der Spezifikation definiert werden, dass bestimmte Blöcke im graphischen Steuerungsmodell nur Lesezugriffe auf das Datenelement aufweisen, oder dass Lese- und Schreibzugriffe gewährt werden.

Gemäß einer weiteren bevorzugten Weiterbildung der Erfindung ist bevorzugt vorgesehen, dass die Spezifikation Zusatzinformationen umfasst, die einen Datentypen einer unterstützten Signalart spezifizieren, gemäß der sich die nicht unterstützte Signalart verhält. Die unterstützte Signalart umfasst vorliegend nicht lediglich Signalarten, die vom graphischen Steuerungsmodell unterstützt werden, sondern insbesondere auch Signalarten, die vom Codegenerator unterstützt werden, und für die somit eine entsprechende Bildungsvorschrift vorhanden ist. In anderen Worten kann bevorzugt nicht nur der Bezeichner der Variable des zur nicht unterstützten Signalart korrespondierenden Datentyps in der Spezifikation hinterlegt werden, sondern auch eine Vorschrift, wie sich die nicht unterstützte Signalart verhält. Bevorzugt wird eine Verhaltens-Vorschrift in der Spezifikation hinterlegt, die auf eine vom graphischen Steuerungsmodell unterstützte Signalart verweist und/oder dessen Datentypen spezifiziert. Beispielsweise kann zusätzlich zum Bezeichner in der Spezifikation hinterlegt werden, dass sich die Variable wie ein Skalar, ein Vektor, eine Matrix oder ein Bus-Signal verhält. Dies vereinfacht das Erzeugen des Steuerungsprogrammes, da dergestalt mittels den bekannten Bildungsvorschriften der unterstützten Signalarten aus dem graphischen Steuerungsmodell das Steuerungsprogramm erzeugt wird, auch wenn das graphische Steuerungsmodell nicht unterstützte Signalarten umfasst.

Gemäß einer weiteren bevorzugten Weiterbildung der Erfindung ist vorgesehen, dass die Spezifikation Zusatzinformationen umfasst, die den Datentyp einer unterstützten Signalart spezifizieren, der in der nicht unterstützten Signalart umfasst ist. Bevorzugt umfasst die Spezifikation Zusatzinformationen, die den Datentyp einer Komponente einer nicht unterstützten Signalart spezifizieren. Insbesondere wenn es sich bei der Variable um einen strukturierten Datentypen (wird auch als Verbund bezeichnet, englisch *structure*) handelt, ist es vorteilhaft in der Spezifikation die Komponenten des strukturierten Datentypens zu bezeichnen. Unter einem strukturierten Datentypen wird vorliegend eine Gruppierung mehrerer zusammengehöriger Daten verstanden, wobei die Daten nicht vom gleichen Datentypen sein müssen, und wobei die einzelnen Daten als Komponenten (englisch: *member*) des strukturierten Datentypen bezeichnet werden können. Beispielsweise können also in der Spezifikation Zusatzinformationen hinterlegt werden, dass es sich bei der Variable um einen strukturierten Datentypen handelt, wobei der strukturierte Datentyp mindestens eine Komponente aufweist, die ein Vektor ist. Bevorzugt kann die Spezifikation auch Zusatzinformationen umfassen, die einen Datentyp einer unterstützten Signalart spezifizieren, gemäß der sich eine Komponente des strukturierten Datentyps verhält. Derart wird es also auch ermöglicht, dass im graphischen Steuerungsmodell Signalarten verarbeitet werden, bei denen ein Teil der im Signal enthaltenen Daten eine nicht unterstützte Signalart darstellt. Zudem ist es derart auch möglich, auf Basis eines solchen graphischen Steuerungsmodelles das Steuerungsprogramm zu erzeugen, obwohl nur ein Teil des Datentyps bei der Codegenerierung bekannt ist. Insbesondere kann auf die durch die unterstützte Signalart bekannte Bildungsvorschrift beim Erzeugen des Programmes zurückgegriffen werden.

Gemäß einer bevorzugten Weiterbildung der Erfindung ist vorgesehen, dass das Verfahren zum Verarbeiten der nicht unterstützten Signalart in dem graphischen Steuerungsmodell den Schritt Hinterlegen der Spezifikation in der Definitionsdatenbank und bevorzugt im Datenelement umfasst. Dieser Schritt kann bevorzugt durch einen Nutzer initiiert werden. Alternativ kann dieser Schritt automatisiert über eine Schnittstellenspezifikation oder Tool-Kette erfolgen.

Gemäß einer weiteren bevorzugten Weiterbildung der Erfindung ist vorgesehen, dass das Verfahren zum Verarbeiten der nicht unterstützten Signalart in dem graphischen Steuerungsmodell und besonders bevorzugt das Verfahren zum Erzeugen des Steuerungsprogrammes für die Zielplattform aus dem graphischen Steuerungsmodell der Entwicklungsplattform den Schritt Abrufen der Spezifikation beim Erzeugen des Steuerungsprogrammes umfasst. Dergestalt kann auf den Bezeichner der Variable und bevorzugt auf die Zusatzinformationen zur Variable zugegriffen werden und das Datenspeicher-Objekt über den Bezeichner als Repräsentant für die Variable verwendet werden.

Wie bereits erwähnt wird auf Ebene des graphischen Steuerungsmodelles das Datenspeicher-Objekt, das beim Erzeugen des Steuerungsprogrammes als Repräsentant für die Variable verwenden wird, quasi von außen - sprich vom global erreichbaren Speicherbereich - an diejenigen Blöcke, in denen die nicht unterstützte Signalart verarbeitet wird, übergeben. In diese Hinsicht und mit Blick auf das erzeugte Steuerungsprogramm ist gemäß einer bevorzugten Weiterbildung der Erfindung vorgesehen, dass das Blockdiagramm wenigstens einen nutzerspezifischen Code-Block mit einer vom Nutzer definierten und im graphischen Steuerungsmodell nicht unterstützten Signalart, und/oder wenigstens einen Funktions-Block mit einer externen Funktion mit einer nicht unterstützten Signalart umfasst, wobei beim Erzeugen des Steuerungsprogrammes für die Zielplattform das Steuerungsprogramm in der Form generiert wird, dass durch Referenzieren auf das Datenspeicher-Objekt
a) die über die Spezifikation spezifizierte Variable im vom zum nutzerspezifischen Code-Block korrespondierenden Anteil des Steuerungsprogrammes per Bezeichner verwendet wird, und/oder
b) beim Aufruf des zum Funktions-Block korrespondierenden Anteils des Steuerungsprogrammes die über die Spezifikation spezifizierte Variable als Argument übergeben wird.

Besonders bevorzugt wird also in Bezug zur Variante a), bei der das graphische Steuerungsmodell einen nutzerspezifischen Code-Block (auch Custom-Code-Block genannt) umfasst, in dem eine nicht unterstützten Signalart verwendet wird, das Steuerungsprogramm in der Form generiert, dass in dem zum nutzerspezifischen Code-Block korrespondierenden Anteil des Steuerungsprogrammes die Variable direkt per Bezeichner verwendet wird. Somit wird also schlanker Code generiert, da unnötige Funktionsaufrufe vermieden werden.

In Bezug zu Variante b), bei der im graphische Steuerungsmodell über den Funktions-Block eine externe Funktion mit einer nicht unterstützten Signalart eingebunden wird, wird das Steuerungsprogramm bevorzugt in der Form generiert, dass beim Aufruf des zum Funktions-Block korrespondierenden Anteils des Steuerungsprogrammes die über die Spezifikation spezifizierte Variable als Argument übergeben wird. Somit wird dafür gesorgt, dass im erzeugten Steuerungsprogramm die Variable an der richtigen Stelle, sprich beim Funktionsaufruf, auch vorhanden ist. Ein Argument bezeichnet einen Übergabewert, welcher bei einem Funktionsaufruf angegeben wird. Derart wird also sichergestellt, dass beim Funktionsaufruf eine zur Funktions-Signatur passende Liste von Argumenten angegeben wird, welche an die Funktion übergeben werden.

Gemäß einer weiteren bevorzugten Weiterbildung der Erfindung ist vorgesehen, dass das Blockdiagramm hierarchisch aufgebaut ist und mindestens ein erstes Subsystem und ein zweites Subsystem umfasst, wobei das erste Subsystem ein äußeres Subsystem ist, derart dass das zweite Subsystem von dem ersten Subsystem umfasst wird, wobei das zweite Subsystem wenigstens einen Code-Block umfasst, indem eine nicht unterstützte Signalart verarbeitet wird, wobei die Spezifikation Zusatzinformationen betreffend Weitergabe der vom Datenspeicher-Objekt repräsentierten Variable umfasst, und wobei beim Erzeugen des Steuerungsprogrammes für die Zielplattform das Steuerungsprogramm in der Form generiert wird, dass die vom Datenspeicher-Objekt repräsentierte Variable als Funktionsparameter hierarchisch von dem zum ersten Subsystem korrespondierenden Anteil des Steuerungsprogrammes an den zum zweiten Subsystem korrespondierenden Anteil des Steuerungsprogrammes vererbt wird.

Wenn das graphische Steuerungsmodell hierarchisch aufgebaut ist, kann eine Vielzahl von Blöcken in einer untergeordneten Ebene - vorliegend das zweite Subsystem - den Aufbau eines Blocks in einer übergeordneten Ebene - vorliegend das erste Subsystem - beschreiben. Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren. Insbesondere ist vorgesehen, dass die Spezifikation Zusatzinformationen betreffend die Weitergabe der vom Datenspeicher-Objekt repräsentierten Variable von dem ersten Subsystem zu dem zweiten Subsystem umfasst, so dass auf Ebene des Steuerungsprogrammes eine Vererbung der Variable als Funktionsparameter stattfindet.

Bei der Vererbung werden Variablen und Funktionen einer Basisklasse in einer abgeleiteten Klasse wiederverwendet und eventuell erweitert. Dies ermöglicht schlanken Code nach dem DRY (*Don't Repeat Yourself*) Prinzip oder der objektorientierten Programmierung zu erstellen und Ressourcen zu schonen.

Gemäß einer weiteren bevorzugten Weiterbildung der Erfindung ist vorgesehen, dass das Blockdiagramm wenigstens einen Block umfasst, in dem Signale der nicht unterstützten Signalart ausgelesen werden und/oder Signale der nicht unterstützten Signalart geschrieben werden, und wobei beim Erzeugen des Steuerungsprogrammes für die Zielplattform das Steuerungsprogramm in der Form generiert wird, dass durch Referenzieren auf das Datenspeicher-Objekt ein Lesezugriff und/oder ein Schreibzugriff auf die über die Spezifikation spezifizierte Variable des Datentyps stattfindet. Auf Ebene des graphischen Steuerungsmodelles lässt sich ein Schreiben auf ein Signal der nicht unterstützten Signalart beispielsweise ermöglichen, indem mittels eines Input-Port-Blockes ein Signal der nicht unterstützten Signalart von außerhalb ins System eingebracht wird und innerhalb des Systems mittels eines DataStore-Write-Blocks, der in den durch das Datenspeicher-Objekt spezifizierten global erreichbaren Speicherbereich schreibt, geschrieben wird. Beim DataStore-Write-Block handelt es sich um ein Beispiel eines spezifizierenden Blocks. Analog lässt sich über einen DataStore-Read-Block, der aus dem durch das Datenspeicher-Objekt spezifizierten global erreichbaren Speicherbereich liest, das Signal der nicht unterstützten Signalart lesen und mittels eines Output-Port-Blockes an ein Ziel außerhalb des Systems weitergeben. Beim DataStore-Read-Block handelt es sich um ein Beispiel eines konsumierenden Blockes. In dieser Form lässt sich auf Ebene des graphischen Steuerungsmodelles ohne Kenntnis der konkreten Art der nicht unterstützten Signalart ein Lesen des Signales und/oder Beschreiben des Signales - sprich ein Konsumieren und Spezifizieren - ermöglichen und das Signal an weitere Blöcke weiterleiten. Auf Ebene des Steuerungsprogrammes wird dies bevorzugt umgesetzt, indem im Rahmen einer Zugriffsfunktion (auch Zugriffsmethode genannt) durch Referenzieren auf das Datenspeicher-Objekt der entsprechende Lesezugriff bzw. Schreibzugriff auf die über die Spezifikation spezifizierte Variable stattfindet, deren Datentyp zur nicht unterstützten Signalart korrespondiert, ohne dass dafür konkrete und nähere Kenntnisse der nicht unterstützten Signalart notwendig sind. Bevorzugt wird das Steuerungsprogramm in der Form generiert, dass der Schreibzugriff als Änderungsmethode (auch *setter* genannt) umgesetzt wird und/oder der Lesezugriff als Abfragemethode (auch *getter* genannt) umgesetzt wird.

Gemäß einer weiteren Weiterbildung der Erfindung ist vorgesehen, dass das Blockdiagramm wenigstens einen ersten Block umfasst, dessen Ausgangswert eine nicht unterstützte Signalart ist und als indexdefinierenden Eingangswert an einen zweiten Block übergeben wird, der eine dynamische Selektion und/oder eine dynamische Zuweisung durchführt, wobei die Definitionsdatenbank ein erstes Datenspeicher-Objekt und ein zweites Datenspeicher-Objekt umfasst, wobei beim Erzeugen des Steuerungsprogrammes das erstes Datenspeicher-Objekt als Repräsentant für eine in einem zum ersten Block korrespondierenden Anteil des Steuerungsprogrammes verarbeiteten ersten Variable verwendet wird, und wobei beim Erzeugen des Steuerungsprogrammes das zweite Datenspeicher-Objekt als Repräsentant für eine in einem zum zweiten Block korrespondierenden Anteil des Steuerungsprogrammes verarbeiteten zweiten Variable verwendet wird, wobei die Spezifikation des zweiten Datenspeicherobjektes Zusatzinformationen umfasst, dergestalt, dass sich die im zweiten Block verarbeitete nicht unterstützte Signalart wie ein assoziativer Datentyp umfassend mehrere Elemente verhält und die Zusatzinformationen eine Zugriffsvorschrift für einen Zugriff auf ein Element umfassen, wobei beim Erzeugen des Steuerungsprogrammes für die Zielplattform das Steuerungsprogramm in der Form generiert wird,
- dass in dem zum ersten Block korrespondierenden Anteil des Steuerungsprogrammes ein Lesezugriff auf die vom ersten Datenspeicher-Objekt repräsentierte erste Variable erfolgt, und dass in dem zum zweiten Block korrespondierenden Anteil des Steuerungsprogrammes ein dynamischer Lese- und/oder Schreibzugriff auf ein Element der als assoziativen Datentypen ausgestaltete und vom zweiten Datenspeicher-Objekt repräsentierte zweiten Variable erfolgt, und
- dass die erste Variable in dem zum ersten Block korrespondierenden Anteil des Steuerungsprogrammes ein Schlüssel ist, der Zugriff zu einem Element der als assoziativen Datentypen ausgestalteten zweiten Variable ermöglicht, die in dem zum zweiten Block korrespondierenden Anteil des Steuerungsprogrammes verarbeitet wird.

Bei graphischen Steuerungsmodellen, bei denen ein Funktionsausgang - sprich der Ausgang des ersten Blockes - einen Zeiger oder Index zurückliefert, der den Indexeingang für eine dynamische Selektion und/oder eine dynamische Zuweisung des zweiten Blockes treibt, wird modellierungstechnisch also in Bezug zur dynamischen Selektion und/oder zur dynamischen Zuweisung die unterstützte Signalart durch einen dynamischen Elementzugriff aus dem Signal der nicht unterstützten Signalart herausgeholt. Die in der Spezifikation des zweiten Datenspeicherobjektes hinterlegte Zugriffsvorschrift für die im zweiten Block verarbeitete nicht unterstützte Signalart kann als Funktion oder Methode in der Spezifikation hinterlegt werden. Beim Erzeugen des Steuerungsprogrammes wird dann bevorzugt diese hinterlegte Funktion oder Methode verwendet.

Unter einem assoziativen Datentyp wird vorliegend eine Gruppierung mehrerer zusammengehöriger Daten verstanden, wobei die Daten bevorzugt gleichartig strukturiert sind. Die einzelnen Daten werden als Elemente des assoziativen Datentyps bezeichnet. Der Zugriff auf ein Element des assoziativen Datentyps kann numerisch über einen Index des entsprechenden Elementes erfolgten, oder über einen Schlüssel zur Adressierung des Elementes. Der Schlüssel kann von einem beliebigen Datentyp (beispielsweise eine Zeichenkette) sein, muss aber das Element eindeutig identifizieren.

In diesem Zusammenhang ist gemäß einer weiteren bevorzugten Weiterbildung der Erfindung vorgesehen, dass der assoziative Datentyp ein assoziatives Array ist, und mit dem Schlüssel ein Array-Element-Zugriff durchführbar ist. In diesem Fall ist die in der Spezifikation des zweiten Datenspeicherobjektes hinterlegte Zugriffsvorschrift also bevorzugt eine Methode, um einen Array-Element-Zugriff durchzuführen. Bei einem assoziativen Array kann anders als bei einem gewöhnlichen Array der Schlüssel auch nicht numerisch - also beispielsweise eine Zeichenkette - sein.

Gemäß einer alternativen bevorzugten Weiterbildung der Erfindung ist in diesem Zusammenhang vorgesehen, dass der assoziative Datentyp ein Teil des Hauptspeichers der Zielplattform spezifiziert, und dass der Schlüssel eine Adresse auf den Hauptspeicher darstellt. In anderen Worten ist der Schlüssel also ein Zeiger (englisch *pointer*), der eine Speicheradresse zwischenspeichert und auf einen durch die Adresse spezifizierten Ort des Hauptspeichers referenziert. Im Hauptspeicher können Daten wie Variablen, Objekte oder Programmanweisungen gespeichert sein. Das Erlangen der dort hinterlegten Daten wird als Dereferenzieren bezeichnet.

In Bezug zum ersten Block des Blockdiagrammes, dessen Ausgangswert eine nicht unterstützte Signalart ist, ist auf Ebene des Steuerungsprogrammes bevorzugt vorgesehen, dass in dem zum ersten Block korrespondierenden Anteil des Steuerungsprogrammes ein untypisierter Zeiger deklariert wird. Ein untypisierter Zeiger (englisch *Pointer to void*) ist ein Zeiger, bei dem der Typ der Daten, bei der Adresse des Hauptspeichers, auf den der Zeiger verweist, nicht deklariert wird. Ein untypisierter Zeiger kann nicht ohne weiteres dereferenziert werden - sprich es ist nicht ohne weiteres möglich, an die im Hauptspeicher bei der Adresse hinterlegten Daten zu gelangen. Der untypisierter Zeiger wird bevorzugt für die Dereferenzierung zuerst per Typumwandlung in einen typisierten Zeiger umgewandelt. Entsprechend ist in diesem Fall vorgesehen, dass die in der Spezifikation des zweiten Datenspeicherobjektes hinterlegte Zugriffsvorschrift bevorzugt eine Zugriffsvorschrift ist, um eine Typumwandlung des untypisierten Zeigers in einen typisierten Zeiger durchzuführen, so dass im zum zweiten Block korrespondierenden Anteil des Steuerungsprogrammes der dynamischer Lese- und/oder Schreibzugriff auf die Adresse des Hauptspeichers der Zielplattform durchgeführt werden kann.

Gemäß einer bevorzugten Weiterbildung der Erfindung umfasst das Erzeugen des Steuerungsprogrammes für die Zielplattform aus dem graphischen Steuerungsmodell der Entwicklungsplattform die Schritte
- Erzeugen einer Zwischendarstellung aus dem graphischen Steuerungsmodell,
- Optimieren der erzeugten Zwischendarstellung, und
- Erzeugen des Steuerungsprogrammes für die Zielplattform durch Übersetzen der optimierten Zwischendarstellung,
wobei wenigstens einer der Schritte, ein Abrufen des Bezeichners der Variable umfasst, dessen Datentyp zur nicht unterstützten Signalart korrespondiert, zur Verwendung des Datenspeicher-Objektes als Repräsentanten für die Variable.

Es wird also bevorzugt ein Verfahren zum Erzeugen des Steuerungsprogrammes für die Zielplattform aus dem graphischen Steuerungsmodell der Entwicklungsplattform bereitgestellt, bei dem das Erzeugen des Steuerungsprogrammes ein Transformieren des graphischen Steuerungsmodelles in eine Zwischendarstellung, ein bevorzugt sukzessives Optimieren der Zwischendarstellung und ein Übersetzen der optimierten Zwischendarstellung in das Steuerungsprogrammes umfasst, wobei wenigstens einer der Schritte unter Berücksichtigung der in der Definitionsdatenbank hinterlegten Spezifikation durchgeführt wird, so dass der Bezeichner der Variable abgerufen wird. Bevorzugt wird schon beim Erzeugen der Zwischendarstellung aus dem graphischen Steuerungsmodell der Bezeichner abgerufen. Derart sind noch sämtliche Informationen des graphischen Steuerungsmodelles verfügbar.

Bevorzugt werden in der Zwischendarstellung die Blöcke des Blockdiagrammes des graphischen Steuerungsmodells in Anweisungen mit fester Ausführungsreihenfolge übersetzt, wodurch die Struktur der Zwischendarstellung semantisch eine textuelle Programmiersprache abbildet. Der Schritt des Transformierens kann eine Mehrzahl von Teilschritten beinhalten, wie das Überprüfen einer Anzahl von Regeln und das Anfügen von weiteren Codegenerierungsinformationen. Das Verwenden der des Datenspeicher-Objektes über den Bezeichner als Repräsentanten für die Variable kann prinzipiell in einem beliebigen Zwischenschritt des Transformierens erfolgt, und erfolgt bevorzugt bei jedem Transformationsschritt.

Gemäß einer weiteren Weiterbildung der Erfindung ist vorgesehen, dass das Steuerungsprogramm in C-Code erzeugt wird. Unter C-Code wird vorliegend eine Programmiersprache verstanden, die von der Syntax und/oder vom grundlegenden Sprachaufbau an C angelehnt ist. Solche Sprachen weisen beispielsweise durch Semikolons abgeschlossene Anweisungen, durch geschweifte Klammern getrennte Codeblöcke, durch Klammern getrennte Parameter und/oder in Infixnotation definierte arithmetische und logische Ausdrücke auf. Sie werden teilweise auch als "Sprachen mit geschweiften Klammern" bezeichnet. Bevorzugt umfasst C-Code vorliegend auch Code in der Programmiersprache C++, Handel-C und/oder SA-C. Weiter bevorzugt wird darunter eine standardisierte Form von C-Code wie ANSI C, ANSI C++, ISO C, ISO C++, Standard C und/oder Standard C++ verstanden, die vom *American National Standards Institute* (ANSI), ISO/IEC JTC 1/SC 22/WG 14 der *International Organization for Standardization* (ISO), ISO/IEC JTC 1/SC 22/WG 21 des "The C++ Standards Committee - ISOCPP" der *International Organization for Standardization* (ISO) und/oder der *International Electrotechnical Commission* (IEC) veröffentlicht werden.

Die Erfindung betrifft ferner ein Verfahren zum Konfigurieren einer als Steuergerät ausgestalteten Zielplattform, wobei die Zielplattform wenigstens eine Recheneinheit umfasst, und bevorzugt wenigstens einen Sensor und/oder Aktor aufweist, um Daten eines physikalischen Prozesses zu erfassen und/oder auf einen physikalischen Prozess einzuwirken, umfassend die Schritte:
- Einlesen eines graphischen Steuerungsmodell einer Entwicklungsplattform
- Erzeugen eines Steuerungsprogrammes für die Zielplattform aus dem eingelesenen graphischen Steuerungsmodell nach dem oben beschriebenen Verfahren,
- Erzeugen eines für die Recheneinheit der Zielplattform ausführbaren Codes durch Kompilieren des erzeugten Steuerungsprogrammes,
- Übertragen des erzeugten ausführbaren Codes auf die Zielplattform und/oder Hinterlegen des erzeugten ausführbaren Codes auf einem nicht-flüchtigen Speicher der Zielplattform und/oder Ausführen des erzeugten ausführbaren Codes durch die Recheneinheit der Zielplattform.

Das Steuergerät umfasst bevorzugt eine Schnittstelle zur Verbindung mit der Entwicklungsplattform. Weiter bevorzugt umfasst das Steuergerät einen Mikrocontroller mit einer von einem Prozessor der Entwicklungsplattform abweichenden Architektur, einen Arbeitsspeicher und einen nichtflüchtigen Speicher. Weiter bevorzugt kann das Steuergerät auch mehr als eine Recheneinheit umfassen.

Weiterhin betrifft die Erfindung eine Vorrichtung zur Datenverarbeitung umfassend Mittel zur Ausführung des oben beschriebenen computerimplementierten Verfahrens zum Erzeugen des Steuerungsprogrammes.

Besonders bevorzug umfasst die Vorrichtung eine Definitionsdatenbank zum Speichern von Informationen zum graphischen Steuerungsmodell, und insbesondere zum Hinterlegen des Datenspeicher-Objektes und zum Hinterlegen der Spezifikation mit wenigstens einem Bezeichner und gegebenenfalls der Zusatzinformationen. Die Definitionsdatenbank kann eine Baumstruktur aufweisen und/oder als eine einfache Datei in einem Speicher des der Vorrichtung hinterlegt sein. Alternativ kann vorgesehen sein, dass die Spezifikation und Zusatzinformationen in einem dedizierten Datenbanksystem hinterlegt sind.

Ferner betrifft die Erfindung ein Computerprogrammprodukt umfassend Befehle, die bei der Ausführung des Programms durch einen Computer diesen veranlassen, das oben beschriebene computerimplementierte Verfahren zum Erzeugen des Steuerungsprogrammes auszuführen.

Ferner betrifft die Erfindung einen computerlesbaren Datenträger, auf dem das obige Computerprogrammprodukt gespeichert ist.

Bevorzugt sind die Befehle auf dem computerlesbaren Datenträger eingebettet, und die Befehle bewirken, wenn sie von einem Prozessor des Computers ausgeführt werden, dass der Prozessor das Verfahren zum Erzeugen des Steuerungsprogrammes ausführt.

Die technischen Vorteile und Effekte des Verfahrens zum Konfigurieren der als Steuergerät ausgestalteten Zielplattform, der Vorrichtung zur Datenverarbeitung, des Computerprogrammproduktes und des computerlesbaren Datenträgers ergeben sich für den Fachmann durch die Beschreibung des Verfahrens zum Erzeugen des Steuerungsprogrammes, sowie durch die nachfolgend beschriebenen Ausführungsbeispiele.

Die Erfindung wird nachfolgend unter Bezugnahme auf die Zeichnungen näher erläutert. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

In der Zeichnung zeigen
- Fig. 1: schematisch eine Vorrichtung zur Datenverarbeitung, gemäß einem bevorzugten Ausführungsbeispiel der Erfindung,
- Fig. 2: schematisch die auf der Vorrichtung gemäß Figur 1 installierten Softwarekomponenten,
- Fig. 3 und 4: schematisch ein graphisches Steuerungsmodell anhand dessen ein computerimplementierten Verfahren zum Verarbeiten einer nicht unterstützten Signalart in dem graphischen Steuerungsmodell derart, dass ein Steuerungsprogramm erzeugt wird, gemäß einem bevorzugten Ausführungsbeispiel der Erfindung, illustriert wird,
- Fig. 5: schematisch eine Definitionsdatenbank zu dem in den Figuren 3 und 4 gezeigten graphischen Steuerungsmodell,
- Fig. 6 a) und b): schematisch zwei hierarchisch aufgebaute graphische Steuerungsmodelle,
- Fig. 7: schematisch ein weiteres graphisches Steuerungsmodell zur Erläuterung des computerimplementierten Verfahrens zum Verarbeiten einer nicht unterstützten Signalart gemäß einem bevorzugten Ausführungsbeispiel der Erfindung, und
- Fig. 8: schematisch ein weiteres graphisches Steuerungsmodell zur Erläuterung des computerimplementierten Verfahrens zum Verarbeiten einer nicht unterstützten Signalart gemäß einem bevorzugten Ausführungsbeispiel der Erfindung.

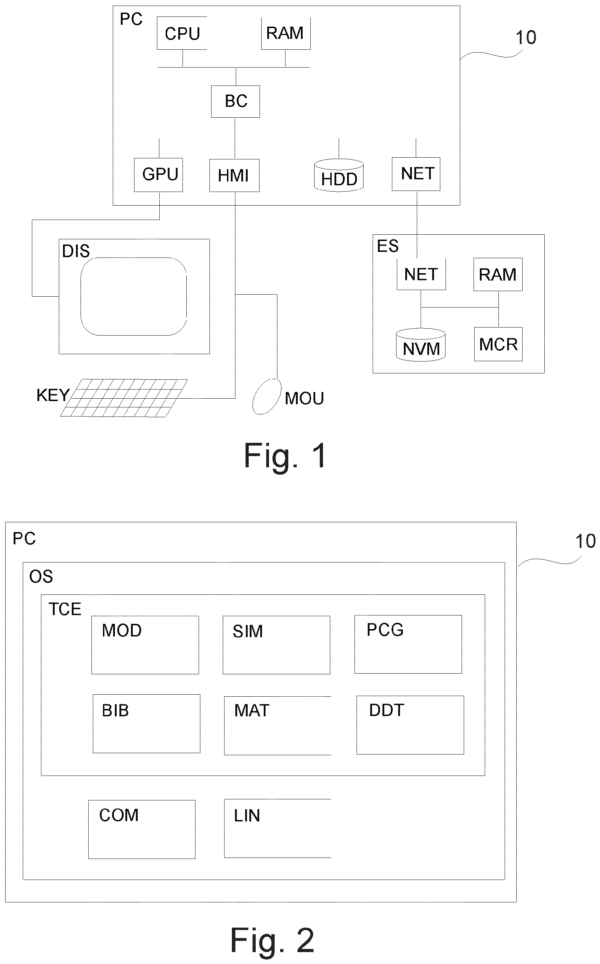

Figur 1 zeigt schematisch eine beispielhafte Ausführung einer Vorrichtung zur Datenverarbeitung 10, vorliegend Computersystem PC genannt. Das Computersystem PC ist dazu eingerichtet ein Verfahren zum Erzeugen eines Steuerungsprogrammes für eine Zielplattform ES aus einem graphischen Steuerungsmodell einer Entwicklungsplattform - sprich des Computersystems - auszuführen. Das Computersystem PC weist einen Prozessor CPU auf, der insbesondere als Mehrkernprozessor realisiert sein kann, einen Arbeitsspeicher RAM und einen Buscontroller BC. Bevorzugt ist das Computersystem PC dazu ausgelegt, von einem Nutzer direkt manuell bedient zu werden, wobei über eine Grafikkarte GPU ein Monitor DIS und über eine Mensch-Maschine-Schnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem PC umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES - sprich die Zielplattform ES - angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für die Zielplattform ES ausgeführt sein. Zweckmäßigerweise umfasst es eine Schnittstelle NET zur Verbindung mit dem Computersystem PC, einen Mikrocontroller MCR mit einer von dem Prozessor des Computersystems PC abweichenden Architektur, einen Arbeitsspeicher RAM und einen nichtflüchtigen Speicher NVM.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner und/oder dem Steuergerät ES aufzubauen.

Eine technische Rechenumgebung TCE ermöglicht die Erstellung von Modellen - insbesondere graphische Steuerungsmodelle 12 und die Erzeugung eines Steuerungsprogrammes, auch Quellcode genannt, aus den graphischen Steuerungsmodellen 12. In einer Modellierumgebung MOD können vorzugsweise über eine graphische Benutzerschnittstelle graphische Steuerungsmodelle 12 eines dynamischen Systems erstellt werden. Hierbei kann es sich insbesondere um Blockdiagramme handeln, welche mehrere Blöcke 14, 16, 18, 28, 30, 32, 34, 36, 38, 40, 42, 46 umfassen und das zeitliche Verhalten und/oder interne Zustände eines dynamischen Systems beschreiben. Zumindest einige der Blöcke 14, 16, 18, 28, 30, 32, 34, 36, 38, 40, 42, 46 können über Signallinien miteinander verbunden sein, wobei die Signallinien gerichtete Verbindungen zum Austausch von Signalen unterschiedlicher Signalarten darstellen, wobei die Signale skalar oder zusammengesetzt sein können. Über die Blöcke 14, 16, 18, 28, 30, 32, 34, 36, 38, 40, 42, 46 können auf den Signalen durchzuführende Operationen und/oder Rechenschritte definiert werden. Insbesondere können mittels für das graphische Steuerungsmodell 12 global erreichbaren Speicherbereichen, Signale zwischen zwei nicht über eine Signalline verknüpfte Blöcke 14, 16, 18, 28, 30, 32, 34, 36, 38, 40, 42, 46 weiterzugeben werden. Dafür umfasst eine Definitionsdatenbank DDT ein Datenspeicher-Objekt 20, das den global erreichbaren Speicherbereich spezifiziert.

Die Rechenumgebung TCE umfasst eine oder mehrere Bibliotheken BIB, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems PC.

Aus einem erstellten Modell kann mit Hilfe eines Codegenerators PCG der Quellcode bevorzugt in einer Programmiersprache wie C erzeugt werden. Im erzeugten Quellcode werden die Signalarten durch unterschiedliche Datentypen umgesetzt, wobei das graphische Steuerungsmodell 12 allerdings nicht alle im Steuerungsprogramm notwendigen Datentypen unterstützt. Um den Quellcode zu erzeugen, wird im vorliegenden Ausführungsbeispiel das Verfahren zum Erzeugen eines Steuerungsprogrammes für eine Zielplattform ES aus dem graphischen Steuerungsmodell 12 der Entwicklungsplattform durchgeführt. Zudem wird vorliegend in der Definitionsdatenbank DDT zusätzliche Informationen zu dem Modell 12, insbesondere eine Spezifikation mit mindestens einem Bezeichner 22 für eine Variable eines zu einer nicht unterstützten Signalart korrespondierenden Datentyps hinterlegt und beim Erzeugen des Quellcodes das Datenspeicher-Objekt 20 über den Bezeichner 22 als Repräsentanten für die Variable verwendet.

Weiterhin können in der Definitionsdatenbank DDT auch andere zusätzliche Informationen zu dem Modell 12, wie Informationen zu den Variablen in den Blöcken - Blockvariablen genannt - hinterlegt werden. Den Blockvariablen können Wertebereiche und/oder Skalierungen zugeordnet werden, um eine Berechnung des Modells mit Festkomma-Instruktionen zu unterstützten. Auch gewünschte Eigenschaften des Quellcodes, beispielsweise Konformität zu einem Standard wie MISRA, können in der Definitionsdatenbank DDT eingestellt bzw. hinterlegt werden. Jede Blockvariable kann einem vorgegebenen Variablentyp zugeordnet werden und/oder es können eine oder mehrere gewünschte Eigenschaften, wie beispielsweise die Zulässigkeit von Optimierungen wie einem Zusammenfassen von Variablen eingestellt werden.

Der Codegenerator PCG wertet vorzugsweise die Einstellungen der Definitionsdatenbank DDT und insbesondere den hinterlegten Bezeichner 22 aus und verwendet das Datenspeicher-Objekt 20 bei der Erzeugung des Quellcodes über den Bezeichner 22 als Repräsentanten für die Variable desjenigen Datentypen, zu dem keine korrespondierende Signalart existiert. Die Definitionsdatenbank DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatenbank kann eine Programmschnittstelle und/oder Import-/Export-Funktionen aufweisen.

Das Computersystem PC weist in diesem Ausführungsbeispiel einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

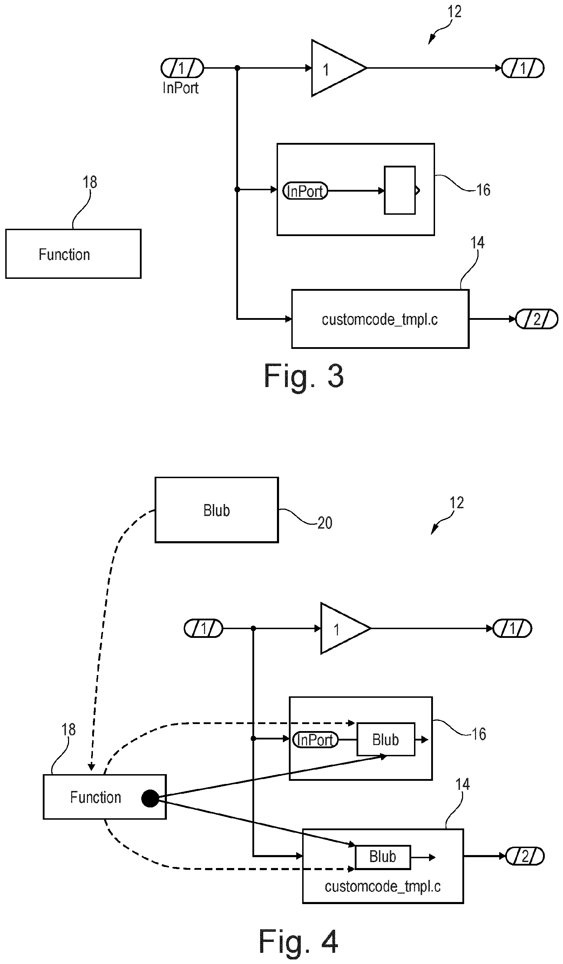

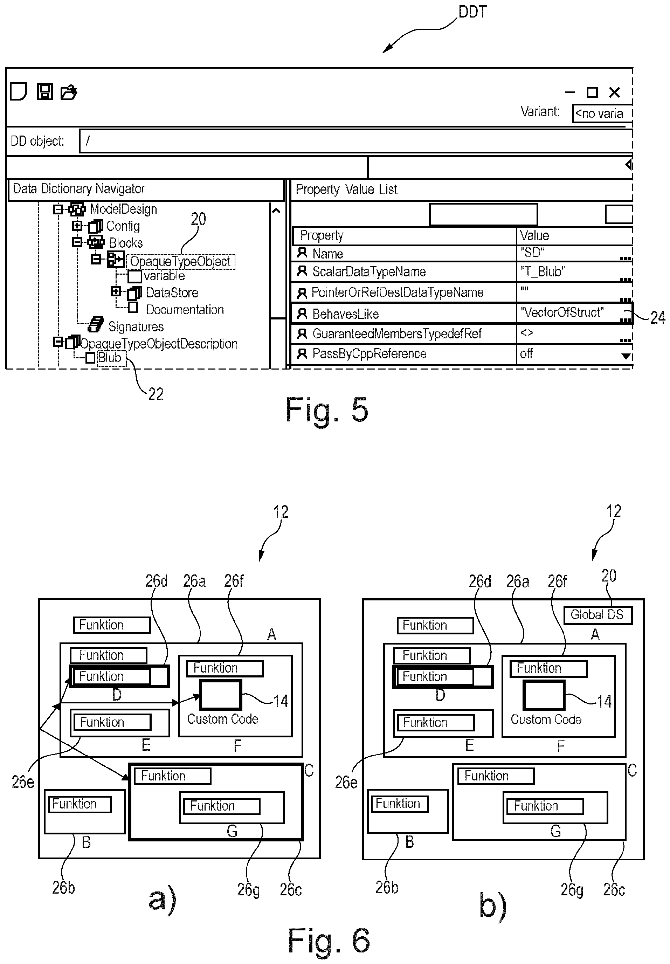

Figuren 3 bis 5 zeigen anhand eines beispielhaften graphischen Steuerungsmodelles 12 und einer beispielhaften Definitionsdatenbank DDT das Prinzip des computerimplementierten Verfahrens zum Verarbeiten der nicht unterstützten Signalart in dem graphischen Steuerungsmodell 12 derart, dass das Steuerungsprogramm erzeugt wird. Figur 3 zeigt ein beispielhaftes graphisches Steuerungsmodell 12, welches vorliegend einen nutzerspezifischen Code-Block 14 mit einer vom Nutzer definierten und nicht unterstützten Signalart umfasst, und einen Funktions-Block 16 mit einer externen Funktion mit einer nicht unterstützten Signalart. In den Blöcken 14 und 16 befindet sich also Code mit nicht vollständig bekanntem Inhalt. Um die Schnittstelle im Code um die nicht unterstützte Signalart zu erweitern, soll ein Objekt 18 mit der nicht unterstützten Signalart von außen als Funktionsparameter übergeben werden. Dies wird im Rahmen des vorliegenden Ausführungsbeispiels und mit Bezugnahme zu den Figuren 4 und 5 wie folgt umgesetzt:
Die Definitionsdatenbank DDT - schematisch in Figur 5 dargestellt - umfasst ein Datenspeicher-Objekt 20, das einen für das graphische Steuerungsmodell 12 global erreichbaren Speicherbereich spezifiziert, so dass das graphische Steuerungsmodell 12 dazu ausgestaltet ist, Signale zwischen zwei nicht über eine Signalline verknüpfte Blöcke - vorliegend Block 18 und Block 16 bzw. Block 18 und Block 14 - weiterzugeben. In der Definitionsdatenbank DDT ist zudem eine Spezifikation mit mindestens einem Bezeichner 22 für eine Variable eines zu einer nicht unterstützten Signalart korrespondierenden Datentyps hinterlegt. Vorliegend ist der Bezeichner "Blub".

Beim Erzeugen des Steuerungsprogrammes für die Zielplattform wird das Datenspeicher-Objekt 20 über den Bezeichner 22 als Repräsentant für die Variable verwendet, wie dies schematisch anhand der Pfeile in Figur 4 dargestellt ist. Derart wird also auf Ebene des graphischen Steuerungsmodelles 12 das Datenspeicher-Objekt 20, das beim Erzeugen des Steuerungsprogrammes als Repräsentant für die Variable verwenden wird, von außen - sprich vom global erreichbaren Speicherbereich - an diejenigen Blöcke 14, 16, in denen die nicht unterstützte Signalart verarbeitet wird, übergeben.

Auf Ebene des Steuerungsprogrammes wird für den nutzerspezifischen Code-Block 14 und den Funktions-Block 16 mit einer externen Funktion folgenden beispielhaften Quellcode erzeugt, der die Verwendung des Datenspeicher-Objektes 20 über den Bezeichner 22 - vorliegend "Blub" - als Repräsentant für die Variable illustriert:

```
 Foo (int16_t In1, T_Blub* Blub)
 {
     ExternalFunktion(In1, Blub);
     /* Custom Code: output section */
     {
     ... Blub...
     }
 }
```

Beim Aufruf des zum Funktions-Block korrespondierenden Anteils des Steuerungsprogrammes wird die über die Spezifikation spezifizierte Variable also als Argument übergeben - ExternalFunktion (In1, Blub) - während beim dem im vom zum nutzerspezifischen Code-Block korrespondierenden Anteil des Steuerungsprogrammes die über die Spezifikation spezifizierte Variable direkt als Bezeichner verwendet wird - ... Blub....

An der beispielhaften Definitionsdatenbank in Figur 5 ist zudem ersichtlich, dass die Spezifikation Zusatzinformationen 24 umfasst, die einen Datentyp einer unterstützten Signalart spezifizieren, gemäß der sich die nicht unterstützte Signalart verhält. Vorliegend wird spezifiziert, dass sich die nicht unterstützte Signalart wie ein Vektor einer Struktur (VectorOfStruct) verhält.

Figuren 6a) und b) veranschaulichen schematisch bei einem hierarchisch aufgebauten graphischen Steuerungsmodell 12 die Propagation über Subsystem-Grenzen hinweg. Das graphische Steuerungsmodell 12 ist in Figur 6a) und 6b) im Prinzip gleich aufgebaut und umfasst mehrere Subsysteme 26A, 26B, 26C, 26D, 26E, 26F, wobei das Subsystem 26A in Bezug zu den Subsystemen 26D, 26E, 26F ein äußeres Subsystem ist, da die Subsysteme 26D, 26E, 26F vom Subsystem 26A mitumfasst sind. Genauso ist das Subsystem 26C bezogen auf das Subsystem 26G ein äußeres Subsystem.

Im Beispiel in Figur 6a) weisen die Subsysteme 26D und 26C Code-Blöcke auf, in denen eine nicht unterstützte Signalart verarbeitet wird. Zudem weist das Subsystem 26F einen nutzerspezifischer Code-Block 14 auf, indem eine nicht unterstützte Signalart verarbeitet wird.

Da in der Definitionsdatenbank DDT hinterlegten Spezifikation Zusatzinformationen betreffend die Weitergabe der vom Datenspeicher-Objekt repräsentierten Variable - vorliegend mit dem Bezeichner "pAddtional" benannt - hinterlegt sind, und beim Erzeugen des Steuerungsprogrammes für die Zielplattform das Steuerungsprogramm in der Form generiert wird, dass die vom Datenspeicher-Objekt 20 repräsentierte Variable als Funktionsparameter hierarchisch von dem zum ersten Subsystem 26A korrespondierenden Anteil des Steuerungsprogrammes an den zum zweiten Subsystem 26D, 26E, 26F korrespondierenden Anteils des Steuerungsprogrammes vererbt wird, wird für das Beispiel in Figur 6a) folgender Code generiert:

```
 Root(OpaqueType* pAdditional)
 {
     A(pAdditional); /* nicht direkt markiert, Propagation */ B();
     C(pAdditional); /* direkt markiert */
 }
  
     A(OpaqueType* pAdditional)
 {
     D(pAdditional); /* direkt markiert */
     E () ;
     F(pAdditional); /* nicht direkt markiert, Propagation */
 }
  
     C(OpaqueType* pAdditional)
 {
     G(); /* Keine Propagation */
 }
```

Für das in Figur 6b) gezeigte Beispiel, bei dem das Subsystem 26D einen Code-Block aufweist, in dem eine nicht unterstützte Signalart verarbeitet wird und das Subsystem 26F einen nutzerspezifischer Code-Block 14 aufweist, indem eine nicht unterstützte Signalart verarbeitet wird, wird aufgrund des auf der Hierarchieebene des Subsystems von 26A vorhandenen und durch das Datenspeicher-Objekt 20 spezifizierten globalen Speicherbereichs folgender Code generiert:

```
 #include "OpaqueTypeVariables.h"
 Root()
 { /* Data Store Memory-Block innerhalb, kein Additional-Parameter */
     A(&Additional); /* nicht direkt markiert, Propagation */
     B() ;
     C() ;
 }
     A(OpaqueType* pAdditional)
 {
     D(pAdditional); /* direkt markiert */
     E () ;
     F(pAdditional); /* nicht direkt markiert, Propagation */
 }
```

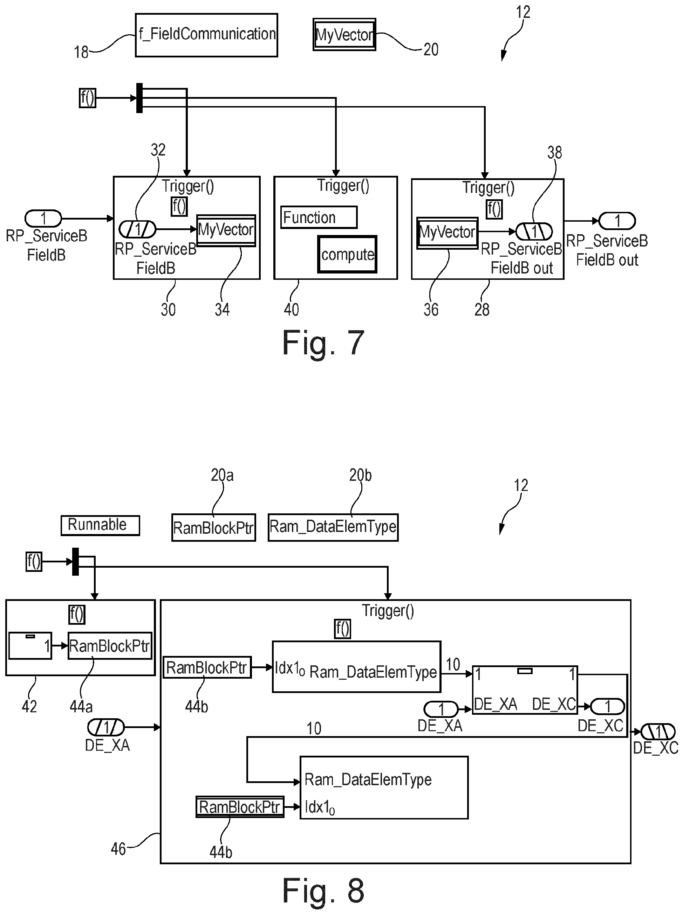

In Bezug zu Figur 7 wird an einem weiteren Ausführungsbeispiel verdeutlicht, wie das Verfahren zum Erzeugen des Steuerungsprogrammes die nicht unterstützte Signalart verarbeitet. Figur 7 zeigt schematisch eine weiteres graphisches Steuerungsmodell 12, welches vorliegend einen Block 28 umfasst, in dem Signale der nicht unterstützten Signalart ausgelesen werden und einen Block 30 umfasst, indem Signale der nicht unterstützten Signalart geschrieben werden. In der Definitionsdatenbank ist im vorliegenden Ausführungsbeispiel als Bezeichner "FieldB" für die Variable des zur nicht unterstützten Signalart korrespondierenden Datentyps hinterlegt.

Auf Ebene des graphischen Steuerungsmodelles 12 ist das Schreiben auf das Signal "MyVector" der nicht unterstützten Signalart ermöglichen, indem mittels eines Input-Port-Blockes 32 ein Signal der nicht unterstützten Signalart von außerhalb ins System eingebracht wird und innerhalb des Systems mittels eines DataStore-Write-Blocks 34, der in den durch das als DataStore-Memory-Block ausgestaltete Datenspeicher-Objekt 20 spezifizierten global erreichbaren Speicherbereich schreibt, geschrieben wird. Der Lesezugriff ist vorliegend über einen DataStore-Read-Block 36, der aus dem durch das Datenspeicher-Objekt 20 spezifizierten global erreichbaren Speicherbereich liest und das Signal der nicht unterstützten Signalart mittels eines Output-Port-Blockes 38 an ein Ziel außerhalb des Systems weitergibt, umgesetzt. Zudem zeigt Figur 7, dass der Block 40, in dem das nicht unterstützte Signal verarbeitet wird, auf das Signal zugreifen kann.

Beim Erzeugen des Steuerungsprogrammes für die Zielplattform wird das Steuerungsprogramm in der Form generiert, dass durch Referenzieren auf das Datenspeicher-Objekt 20 ein Lesezugriff und ein Schreibzugriff auf die über die Spezifikation spezifizierte Variable des Datentyps stattfindet, wobei folgender beispielhafter Code erzeugt wird:

```
 void f_FieldCommunication(void)
 {
     dspace::targetlink: :vectorOfStruct FieldB;
     Get_AdaptiveSwc_RP_ServiceB_FieldB_NoServiceDiscovery_S1(FieldB);
     compute(FieldB);
     Set_AdaptiveSwc_RP_ServiceB_FieldB_NoServiceDiscovery_S1(FieldB);
 }
```

Ohne konkrete und nähere Kenntnisse der nicht unterstützten Signalart "MyVector" wird also der Schreibzugriff im Quellcode als *setter* auf die Variable "FieldB" und der Lesezugriff als *getter* auf die Variable "FieldB" umgesetzt.

In Bezug zu Figur 8 wird an einem weiteren Ausführungsbeispiel verdeutlicht, wie das Verfahren zum Erzeugen des Steuerungsprogrammes die nicht unterstützte Signalart verarbeitet. Figur 8 zeigt schematisch eine weiteres graphisches Steuerungsmodell 12, welches vorliegend wie folgt aufgebaut ist:
Das Blockdiagramm umfasst einen ersten Block 42, dessen Ausgangswert 44a eine nicht unterstützte Signalart ist und als indexdefinierenden Eingangswert 44b an einen zweiten Block 46 übergeben wird, der eine dynamische Selektion und eine dynamische Zuweisung durchführt. Wie in Figur 8 aufgrund der zwei DataStore-Memory Blöcke 20a, 20b ersichtlich ist, umfasst die Definitionsdatenbank ein erstes Datenspeicher-Objekt 20a und ein zweites Datenspeicher-Objekt 20b umfasst, wobei beim Erzeugen des Steuerungsprogrammes das erstes Datenspeicher-Objekt 20a als Repräsentant für eine in einem zum ersten Block 42 korrespondierenden Anteil des Steuerungsprogrammes verarbeiteten ersten Variable verwendet wird, und das zweite Datenspeicher-Objekt 20b als Repräsentant für eine in einem zum zweiten Block 46 korrespondierenden Anteil des Steuerungsprogrammes verarbeiteten zweiten Variable verwendet wird. Die erste Variable weist vorliegend den Bezeichner "RamBlockPtr" auf. Die Spezifikation des zweiten Datenspeicherobjektes 20b umfasst zudem Zusatzinformationen dergestalt, dass sich die im zweiten Block 46 verarbeitete nicht unterstützte Signalart wie ein assoziativer Datentyp umfassend mehrere Elemente verhält und weist weiterhin eine Zugriffsvorschrift für einen Zugriff auf ein Element auf.

Beim Erzeugen des Steuerungsprogrammes für die Zielplattform das Steuerungsprogramm in der Form generiert wird,
- dass in dem zum ersten Block 42 korrespondierenden Anteil des Steuerungsprogrammes ein Lesezugriff auf die vom ersten Datenspeicher-Objekt 20a repräsentierte erste Variable - "RamBlockPtr" - erfolgt, und dass in dem zum zweiten Block 46 korrespondierenden Anteil des Steuerungsprogrammes ein dynamischer Lese- und Schreibzugriff auf ein Element der als assoziativen Datentypen ausgestaltete und vom zweiten Datenspeicher-Objekt 20b repräsentierte zweiten Variable erfolgt, und
- dass die erste Variable in dem zum ersten Block 42 korrespondierenden Anteil des Steuerungsprogrammes ein Schlüssel ist, der Zugriff zu einem Element der als assoziativen Datentypen ausgestalteten zweiten Variable ermöglicht, die in dem zum zweiten Block 46 korrespondierenden Anteil des Steuerungsprogrammes verarbeitet wird.

Im Vorliegenden Beispiel spezifiziert die als assoziativen Datentypen ausgestaltete und vom zweiten Datenspeicher-Objekt 20b repräsentierte zweiten Variable einen Teil des Hauptspeichers der Zielplattform. Der Schlüssel - sprich die erste Variable - stellt im vorliegenden Ausführungsbeispiel eine Adresse auf den Hauptspeicher - sprich einen Zeiger (englisch *pointer*) - dar.

In dem zum ersten Block 42 korrespondierenden Anteil des Steuerungsprogrammes wird also folgender Code generiert, bei dem ein untypisierter Zeiger deklariert wird:

```
 void* RamBlockPtr;
 RWBGetRamBlockPtr(&RamBlockPtr);
```

Weiterhin ist vorgesehen, dass die in der Spezifikation des zweiten Datenspeicherobjektes 20b hinterlegte Zugriffsvorschrift eine Zugriffsvorschrift ist, um eine Typumwandlung des untypisierter Zeigers in einen typisierten Zeiger durchzuführen, so dass im zum zweiten Block 46 korrespondierenden Anteil des Steuerungsprogrammes der dynamischer Lese- und Schreibzugriff auf die Adresse des Hauptspeichers der Zielplattform ES wie folgt durchgeführt wird:

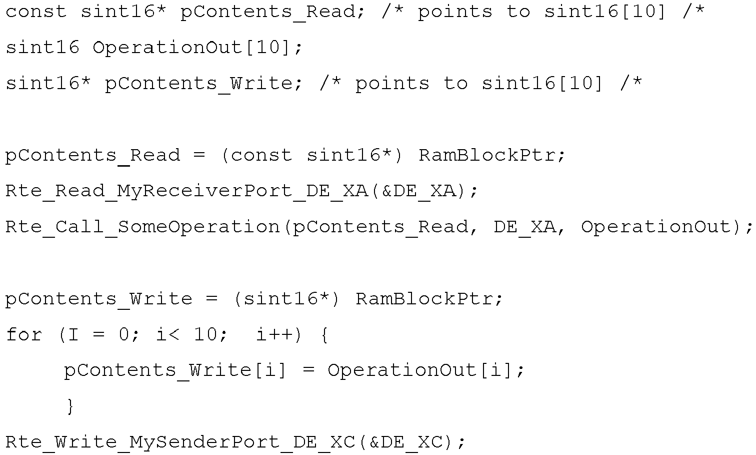

### Bezugszeichenliste

- 10: Vorrichtung zur Datenverarbeitung
- 12: graphisches Steuerungsmodell
- 14: nutzerspezifischer Code-Block
- 16: Funktions-Block mit externer Funktion
- 18: Block
- 20: Datenspeicher-Objekt
- 22: Bezeichner
- 24: Zusatzinformationen
- 26: Subsysteme
- 28: Block, in dem die nicht unterstützte Signalart ausgelesen wird
- 30: Block, in dem die nicht unterstützte Signalart geschrieben wird
- 32: Input-Port Block
- 34: DataStore-Write Block
- 36: DataStore-Read Block
- 38: Output-Port Block
- 40: Block, in dem die nicht unterstützte Signalart verarbeitet wird
- 42: Block, dessen Ausgangswert die nicht unterstützte Signalart ist
- 44a: Ausgangswert
- 44b: Eingangswert
- 46: Block, dessen Eingangswert die nicht unterstützte Signalart ist

- PC: Computersystem
- CPU: Prozessor
- RAM: Arbeitsspeicher
- BC: Buscontroller
- GPU: Grafikkarte
- DIS: Monitor
- HMI: Peripherieschnittstelle
- KEY: Tastatur
- MOU: Maus
- HDD: nichtflüchtiger Datenspeicher
- NET: Schnittstelle, Netzwerkschnittstelle
- ES: Steuergerät
- MCR: Microcontroller
- NVM: Speicher
- OS: Betriebssystem
- TCE: technische Rechenumgebung
- MOD: Modellierungsumgebung
- BIB: Bibliothek
- MAT: Skriptumgebung
- SIM: Simulationsumgebung
- PCT: Codegenerator
- DDT: Definitionsdatensammlung
- COM: Compiler
- LIN: Linker

## Patentansprüche

1. Computerimplementiertes Verfahren zum Verarbeiten einer nicht unterstützten Signalart in einem graphischen Steuerungsmodell (12) einer Entwicklungsplattform (PC) derart, dass ein Steuerungsprogramm für eine Zielplattform (ES) aus dem graphischen Steuerungsmodell (12) der Entwicklungsplattform (PC) erzeugbar ist und bevorzugt erzeugt wird,
wobei das graphische Steuerungsmodell (12) ein Blockdiagramm mit einer Mehrzahl von Blöcken (14, 16, 18, 28, 30, 32, 34, 36, 38, 40, 42, 46) umfasst, und dazu ausgestaltet ist, Signale unterschiedlicher Signalarten zwischen wenigstens zwei Blöcken (14, 16, 18, 28, 30, 32, 34, 36, 38, 40, 42, 46) weiterzugeben,
wobei im erzeugten Steuerungsprogramm die Signalarten durch unterschiedliche Datentypen umgesetzt werden, und wobei das graphische Steuerungsmodell (12) nicht alle im Steuerungsprogramm notwendigen Datentypen unterstützt,
wobei das graphische Steuerungsmodell (12) auf eine Definitionsdatenbank (DDT) referenziert, in der Informationen zum graphischen Steuerungsmodell (12) gespeichert sind,
wobei die Definitionsdatenbank (DDT) wenigstens ein Datenspeicher-Objekt (20) umfasst,
wobei das Datenspeicher-Objekt (20) einen für das graphische Steuerungsmodell (12) global erreichbaren Speicherbereich spezifiziert, so dass das graphische Steuerungsmodell (20) dazu ausgestaltet ist, Signale zwischen zwei nicht über eine Signalline verknüpfte Blöcke (14, 16, 18, 28, 30, 32, 34, 36, 38, 40, 42, 46) weiterzugeben,
**dadurch gekennzeichnet, dass**
in der Definitionsdatenbank (DDT) eine Spezifikation mit mindestens einem Bezeichner (22) für eine Variable eines zu einer nicht unterstützten Signalart korrespondierenden Datentyps hinterlegbar ist, und
beim Erzeugen des Steuerungsprogrammes für die Zielplattform (ES) das Datenspeicher-Objekt (20) über den Bezeichner (22) als Repräsentant für die Variable verwendet wird.

2. Verfahren nach dem vorhergehenden Anspruch, wobei die Spezifikation in einem Datenelement in der Definitionsdatenbank (DDT) hinterlegbar ist, und im graphischen Steuerungsmodell (12) das Datenspeicher-Objekt (20) als Repräsentant für das Datenelement verwendet wird.

3. Verfahren nach Anspruch 2, wobei die Spezifikation Zusatzinformationen betreffend den Zugriff auf das Datenelement und/oder die Weitergabe des Datenelementes im graphischen Steuerungsmodell (12) umfasst.

4. Verfahren nach einem der vorhergehenden Ansprüche, wobei die Spezifikation Zusatzinformationen umfasst, die einen Datentyp einer unterstützten Signalart spezifizieren, gemäß der sich die nicht unterstützte Signalart verhält; und/ oder
wobei die Spezifikation Zusatzinformationen umfasst, die den Datentyp einer unterstützten Signalart spezifizieren, der in der nicht unterstützten Signalart umfasst ist.

5. Verfahren nach einem der der vorhergehenden Ansprüche, wobei das Verfahren den Schritt Hinterlegen der Spezifikation in der Definitionsdatenbank (DDT) und bevorzugt im Datenelement umfasst; und/oder
wobei beim Erzeugen des Steuerungsprogrammes die Spezifikation abgerufen wird.

6. Verfahren nach einem der vorhergehenden Ansprüche, wobei das Blockdiagramm wenigstens einen nutzerspezifischen Code-Block (14) mit einer vom Nutzer definierten und im graphischen Steuerungsmodell (12) nicht unterstützten Signalart umfasst, und/oder wobei das Blockdiagramm wenigstens einen Funktions-Block (16) mit einer externen Funktion mit einer nicht unterstützten Signalart umfasst, wobei beim Erzeugen des Steuerungsprogrammes für die Zielplattform (ES) das Steuerungsprogramm in der Form generiert wird, dass durch Referenzieren auf das Datenspeicher-Objekt (20)
a) die über die Spezifikation spezifizierte Variable im vom zum nutzerspezifischen Code-Block (14) korrespondierenden Anteil des Steuerungsprogrammes per Bezeichner (22) verwendet wird, und/oder
b) beim Aufruf des zum Funktions-Block (16) korrespondierenden Anteils des Steuerungsprogrammes die über die Spezifikation spezifizierte Variable als Argument übergeben wird.

7. Verfahren nach einem der vorhergehenden Ansprüche, wobei das Blockdiagramm hierarchisch aufgebaut ist und mindestens ein erstes Subsystem (26) und ein zweites Subsystem (26) umfasst, wobei das erste Subsystem (26) ein äußeres Subsystem (26a) ist, derart dass das zweite Subsystem (26d, 26e, 26f) von dem ersten Subsystem (26a) umfasst wird, wobei das zweite Subsystem (26d, 26e, 26f) wenigstens einen Code-Block (14) umfasst, indem eine nicht unterstützte Signalart verarbeitet wird, wobei die Spezifikation Zusatzinformationen betreffend Weitergabe der vom Datenspeicher-Objekt (20) repräsentierten Variable umfasst, und wobei beim Erzeugen des Steuerungsprogrammes für die Zielplattform (ES) das Steuerungsprogramm in der Form generiert wird, dass die vom Datenspeicher-Objekt (20) repräsentierte Variable als Funktionsparameter hierarchisch von dem zum ersten Subsystem (26a) korrespondierenden Anteil des Steuerungsprogrammes an den zum zweiten Subsystem (26d, 26e, 26f) korrespondierenden Anteils des Steuerungsprogrammes vererbt wird.

8. Verfahren nach einem der vorhergehenden Ansprüche, wobei das Blockdiagramm wenigstens einen Block (28, 30) umfasst, in dem Signale der nicht unterstützten Signalart ausgelesen werden und/oder Signale der nicht unterstützten Signalart geschrieben werden, und wobei beim Erzeugen des Steuerungsprogrammes für die Zielplattform (ES) das Steuerungsprogramm in der Form generiert wird, dass durch Referenzieren auf das Datenspeicher-Objekt (20) ein Lesezugriff und/oder ein Schreibzugriff auf die über die Spezifikation spezifizierte Variable des Datentyps stattfindet.

9. Verfahren nach einem der vorhergehenden Ansprüche, wobei das Blockdiagramm wenigstens einen ersten Block (42) umfasst, dessen Ausgangswert (44a) eine nicht unterstützte Signalart ist und als indexdefinierenden Eingangswert (44b) an einen zweiten Block (46) übergeben wird, der eine dynamische Selektion und/oder eine dynamische Zuweisung durchführt,
wobei die Definitionsdatenbank (DDT) ein erstes Datenspeicher-Objekt (20a) und ein zweites Datenspeicher-Objekt (20b) umfasst,
wobei beim Erzeugen des Steuerungsprogrammes das erstes Datenspeicher-Objekt (20a) als Repräsentant für eine in einem zum ersten Block (42) korrespondierenden Anteil des Steuerungsprogrammes verarbeiteten ersten Variable verwendet wird, und
wobei beim Erzeugen des Steuerungsprogrammes das zweite Datenspeicher-Objekt (20b) als Repräsentant für eine in einem zum zweiten Block (46) korrespondierenden Anteil des Steuerungsprogrammes verarbeiteten zweiten Variable verwendet wird,
wobei die Spezifikation des zweiten Datenspeicherobjektes (20b) Zusatzinformationen umfasst, dergestalt, dass sich die im zweiten Block (46) verarbeitete nicht unterstützte Signalart wie ein assoziativer Datentyp umfassend mehrere Elemente verhält und die Zusatzinformationen eine Zugriffsvorschrift für einen Zugriff auf ein Element umfassen,
wobei beim Erzeugen des Steuerungsprogrammes für die Zielplattform (ES) das Steuerungsprogramm in der Form generiert wird,
- dass in dem zum ersten Block (42) korrespondierenden Anteil des Steuerungsprogrammes ein Lesezugriff auf die vom ersten Datenspeicher-Objekt (20a) repräsentierte erste Variable erfolgt, und dass in dem zum zweiten Block (46) korrespondierenden Anteil des Steuerungsprogrammes ein dynamischer Lese- und/oder Schreibzugriff auf ein Element der als assoziativen Datentypen ausgestaltete und vom zweiten Datenspeicher-Objekt (20b) repräsentierte zweiten Variable erfolgt, und
- dass die erste Variable in dem zum ersten Block (42) korrespondierenden Anteil des Steuerungsprogrammes ein Schlüssel ist, der Zugriff zu einem Element der als assoziativen Datentypen ausgestalteten zweiten Variable ermöglicht, die in dem zum zweiten Block (42) korrespondierenden Anteil des Steuerungsprogrammes verarbeitet wird.

10. Verfahren nach Anspruch 9, wobei der assoziative Datentyp ein assoziatives Array ist, und mit dem Schlüssel ein Array-Element-Zugriff durchführbar ist.

11. Verfahren nach Anspruch 9, wobei der assoziative Datentyp ein Teil des Hauptspeichers der Zielplattform spezifiziert, und wobei der Schlüssel eine Adresse auf den Hauptspeicher darstellt.

12. Verfahren nach einem der vorhergehenden Ansprüche, wobei das Erzeugen des Steuerungsprogrammes für die Zielplattform (ES) aus dem graphischen Steuerungsmodell (12) der Entwicklungsplattform (PC) die Schritte
- Erzeugen einer Zwischendarstellung aus dem graphischen Steuerungsmodell (12),
- Optimieren der erzeugten Zwischendarstellung, und
- Erzeugen des Steuerungsprogrammes für die Zielplattform (ES) durch Übersetzen der optimierten Zwischendarstellung,
umfasst, und wenigstens einer der Schritte, ein Abrufen des Bezeichners (22) der Variable umfasst, dessen Datentyp zur nicht unterstützten Signalart korrespondiert, zur Verwendung des Datenspeicher-Objektes (20) als Repräsentanten für die Variable.

13. Verfahren zum Konfigurieren einer als Steuergerät ausgestalteten Zielplattform (ES), wobei die Zielplattform (ES) wenigstens eine Recheneinheit (MCR) umfasst und bevorzugt wenigstens einen Sensor und/oder Aktor aufweist, um Daten eines physikalischen Prozesses zu erfassen und/oder auf einen physikalischen Prozess einzuwirken, umfassend die Schritte:
- Einlesen eines graphischen Steuerungsmodell (12) einer Entwicklungsplattform (PC),
- Erzeugen eines Steuerungsprogrammes für die Zielplattform (ES) aus dem eingelesenen graphischen Steuerungsmodell (12) nach dem Verfahren nach einem der vorhergehenden Ansprüche,
- Erzeugen eines für die Recheneinheit (MCR) der Zielplattform (ES) ausführbaren Codes durch Kompilieren des erzeugten Steuerungsprogrammes,
- Übertragen des erzeugten ausführbaren Codes auf die Zielplattform (ES) und/oder Hinterlegen des erzeugten ausführbaren Codes auf einem nicht-flüchtigen Speicher (NVM) der Zielplattform (ES) und/oder Ausführen des erzeugten ausführbaren Codes durch die Recheneinheit (MCR) der Zielplattform (ES).

14. Vorrichtung (10) zur Datenverarbeitung umfassend Mittel zur Ausführung des Verfahrens nach einem der Ansprüche 1 bis 12.

15. Computerprogrammprodukt, umfassend Befehle, die bei der Ausführung des Programms durch einen Computer diesen veranlassen, das Verfahren nach einem der Ansprüche 1 bis 12 auszuführen.
